(19) Europäisches Patentamt
European Patent Office
Office européen des brevets

(11) **EP 4 083 637 A1**

(12) **EUROPEAN PATENT APPLICATION**
published in accordance with Art. 153(4) EPC

(43) Date of publication:
**02.11.2022 Bulletin 2022/44**

(21) Application number: **20907306.3**

(22) Date of filing: **11.12.2020**

(51) International Patent Classification (IPC):
*G01P 21/00* (2006.01)    *G01C 19/5776* (2012.01)

(52) Cooperative Patent Classification (CPC):
**G01C 19/5776; G01C 21/16; G01C 25/00;
G01P 21/00**

(86) International application number:
**PCT/JP2020/046246**

(87) International publication number:
**WO 2021/131780 (01.07.2021 Gazette 2021/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.12.2019 JP 2019236732**

(71) Applicant: **Sony Group Corporation
Tokyo 108-0075 (JP)**

(72) Inventor: **TAKEDA Haruto
Tokyo 108-0075 (JP)**

(74) Representative: **MFG Patentanwälte
Meyer-Wildhagen Meggle-Freund
Gerhard PartG mbB
Amalienstraße 62
80799 München (DE)**

(54) **DRIVE CONTROL DEVICE, DRIVE CONTROL METHOD, AND PROGRAM**

(57) The present disclosure relates to a drive control device, a drive control method, and a program that allow for an improvement in detection accuracy of a multi-IMU.

Angular velocities supplied from a plurality of inertial measurement units (IMUs) are acquired, drive frequencies of the plurality of IMUs are calculated on the basis of acquisition timings of the acquired angular velocities, and on the basis of the drive frequencies of the plurality of IMUs, in a case where an interval between peak frequencies of the drive frequencies is smaller than 1/2 of a half width of a drive frequency distribution, control is performed so as to change the drive frequencies by heating or cooling temperatures of the IMUs so that the interval can be widened. The present disclosure can be applied to a multi-IMU.

*FIG. 7*

**Description**

TECHNICAL FIELD

The present disclosure relates to a drive control device, a drive control method, and a program, and more particularly, to a drive control device, a drive control method, and a program that allow for an improvement in detection accuracy of a multi-IMU.

BACKGROUND ART

There has been proposed a multi-IMU that improves the detection accuracy by integrating detection results of a plurality of inertial measurement units (IMUs) (see Patent Document 1).

CITATION LIST

PATENT DOCUMENT

Patent Document 1: United States Patent Application Publication No. 2016/0047675

SUMMARY OF THE INVENTION

PROBLEMS TO BE SOLVED BY THE INVENTION

Meanwhile, in a vibratory IMU using micro electro mechanical systems (MEMS) used in a multi-IMU using a plurality of IMUs as in the example of Patent Document 1, an angular velocity is detected on the basis of a Coriolis force generated by rotating an object while applying vibration.
However, since a plurality of IMUs generates vibration, resonance may occur in each IMU due to vibration generated by another IMU, and noise caused by resonance may occur.
In particular, manufacturing variations have reduced due to recent improvement in accuracy of machining IMUs, and vibration frequencies individually generated by the manufactured IMUs are analogous in more and more cases. This further causes resonance to be more likely to occur, and increases influence of noise caused by the resonance.
The present disclosure has been made in view of such a situation, and, in particular, is intended to decrease the influence of noise caused by resonance between individual IMUs constituting a multi-IMU and provide a highly accurate multi-IMU.

SOLUTIONS TO PROBLEMS

One aspect of the present disclosure provides a drive control device and a program including: an acquisition unit configured to acquire angular velocities supplied from a plurality of inertial measurement units (IMUs); a drive frequency calculation unit configured to calculate drive frequencies of the plurality of IMUs on the basis of acquisition timings of the angular velocities acquired by the acquisition unit; and a control unit configured to control the plurality of IMUs on the basis of the drive frequencies of the plurality of IMUs.
One aspect of the present disclosure provides a drive control method including: acquiring angular velocities supplied from a plurality of inertial measurement units (IMUs); calculating drive frequencies of the plurality of IMUs on the basis of acquisition timings of the acquired angular velocities; and controlling the plurality of IMUs on the basis of the drive frequencies of the plurality of IMUs.
In one aspect of the present disclosure, angular velocities supplied from a plurality of inertial measurement units (IMUs) are acquired, drive frequencies of the plurality of IMUs are calculated on the basis of acquisition timings of the acquired angular velocities, and the plurality of IMUs is controlled on the basis of the drive frequencies of the plurality of IMUs.

BRIEF DESCRIPTION OF DRAWINGS

Fig. 1 is a diagram illustrating a principle of operation of an IMU.
Fig. 2 is a diagram illustrating that each IMU has a different drive frequency.
Fig. 3 is a diagram illustrating an outline of a multi-IMU of the present disclosure.

Fig. 4 is a diagram illustrating an outline of control of the multi-IMU of the present disclosure.

Fig. 5 is a diagram illustrating a configuration example of the multi-IMU of the present disclosure.

Fig. 6 is a diagram illustrating a configuration example of an IMU in Fig. 5.

Fig. 7 is a diagram illustrating a configuration example of a drive control unit in Fig. 5.

Fig. 8 is a diagram illustrating a method of controlling the drive frequency for suppressing occurrence of resonance.

Fig. 9 is a diagram illustrating a specific method of controlling the drive frequency for suppressing occurrence of resonance.

Fig. 10 is a diagram illustrating a specific method of controlling the drive frequency for suppressing occurrence of resonance.

Fig. 11 is a flowchart illustrating drive control processing by the multi-IMU in Fig. 5.

Fig. 12 is a diagram illustrating a configuration example of a general-purpose personal computer.

MODE FOR CARRYING OUT THE INVENTION

A preferred embodiment of the present disclosure will be described below in detail with reference to the accompanying drawings. Note that, in the present specification and drawings, components having substantially the same functional configurations are denoted by the same reference numerals, and the description thereof will thus not be repeated.

A mode for carrying out the present technology will be described below. The description will be given in the order below.

1. Outline of present disclosure
2. Preferred embodiment
3. Example of execution by software

<<1. Outline of present disclosure>>

<Principle of operation of vibratory IMU>

In particular, the present disclosure decreases an influence of noise caused by resonance between individual IMUs constituting a multi-inertial measurement unit (IMU), and provides a highly accurate multi-IMU.

First, for a description of an outline of the present disclosure, a principle of operation of a vibratory IMU will be described.

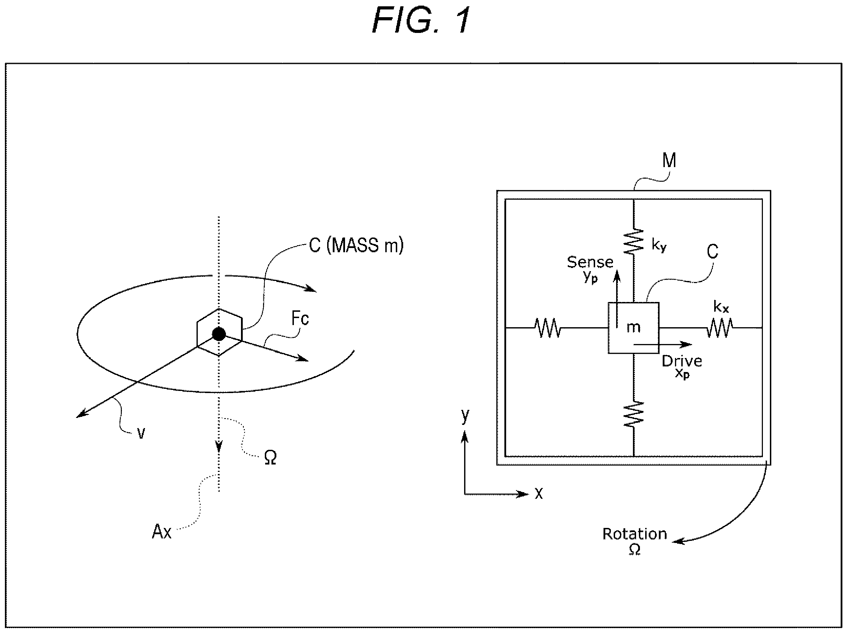

As illustrated in a left part of Fig. 1, a Coriolis force Fc received when an object c having a mass m and operating at a velocity v rotates about an axis Ax at an angular velocity $\Omega$ is represented by the following Formula (1).

$$Fc = -2m\Omega \times v$$

$$(1)$$

At this time, the Coriolis force Fc is in the direction opposite to the rotation direction at the angular velocity $\Omega$, and in the case of the counterclockwise direction, the Coriolis force Fc is turned 90 degrees to the right from the direction of travel.

The IMU is constituted by, for example, a vibratory micro electro mechanical systems (MEMS) gyro sensor. Furthermore, for a description of the IMU, a proof mass M is considered on a plane as illustrated in a right part of Fig. 1.

In the proof mass M, the Coriolis force Fc is generated in a Sense Yp direction perpendicular to both a Drive Xp direction and the rotation axis Ax perpendicular to a paper surface on which the object c having the mass m and constituting the vibratory MEMS gyro sensor rotates at the angular velocity $\Omega$ while vibrating at the velocity v in the Drive Xp direction.

Thus, in the IMU, from a relationship represented by Formula (1), the angular velocity $\Omega$ is detected by back calculation using the relationship of Formula (1) by measuring the Coriolis force Fc generated when the object c having the mass m configured as the proof mass M is rotated about the axis Ax in a state of being continuously vibrated.

<Drive frequency in IMU>

The multi-IMU is provided with a plurality of such IMUs, and detection results of the plurality of IMUs are integrated for an improved detection accuracy.

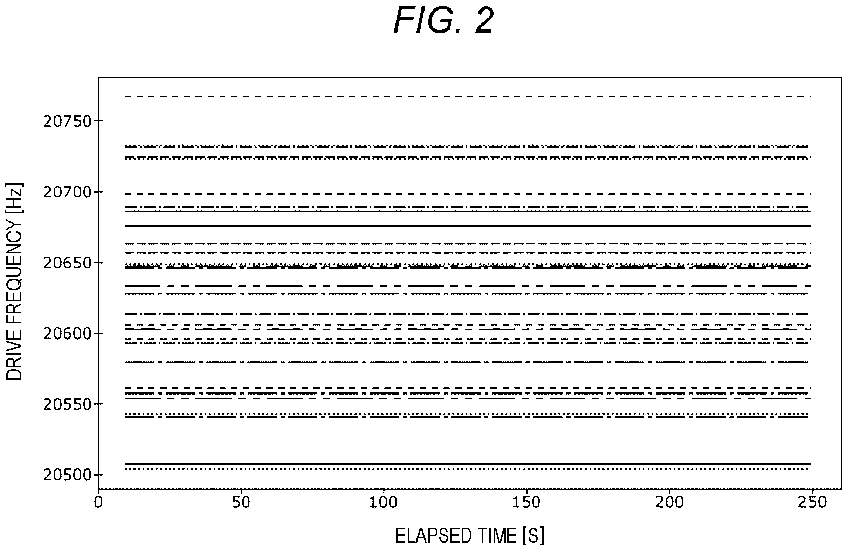

However, in a case where there is a plurality of IMUs, it is necessary to vibrate the object c having the mass m at the velocity v in each IMU, but, as illustrated in Fig. 2, vibration frequencies generated in the plurality of IMUs generally have individual differences and are not the same.

Fig. 2 illustrates results of estimation of drive frequencies for a plurality of IMUs having a drive frequency of 20.8 kHz according to specifications, and shows drive frequency on the vertical axis and elapsed time [S] on the horizontal axis. Furthermore, each graph in Fig. 2 shows an estimated value of the drive frequency of a different IMU. That is, according to Fig. 2, it is represented that the IMUs vibrate at a unique drive frequency under a constant temperature.

However, due to the improvement in the current machining accuracy, the individual differences among IMUs have been reduced, and some of a plurality of IMUs constituting a multi-IMU have had substantially the same drive frequency or drive frequencies close to each other in some cases.

In such a case, resonance may occur between IMUs that vibrate the object c at substantially the same drive frequency or drive frequencies close to each other, and affect the accuracy of the detected angular velocity, thereby preventing angular velocity detection with an appropriate accuracy for the entire multi-IMU.

<Adjustment of drive frequency>

Thus, in the multi-IMU of the present disclosure, occurrence of resonance is suppressed by providing a heating/cooling unit such as a heater and a cooler for each one of the plurality of IMUs, and adjusting the drive frequencies by heating or cooling IMUs in which the drive frequencies are the same or analogous and resonance is likely to occur.

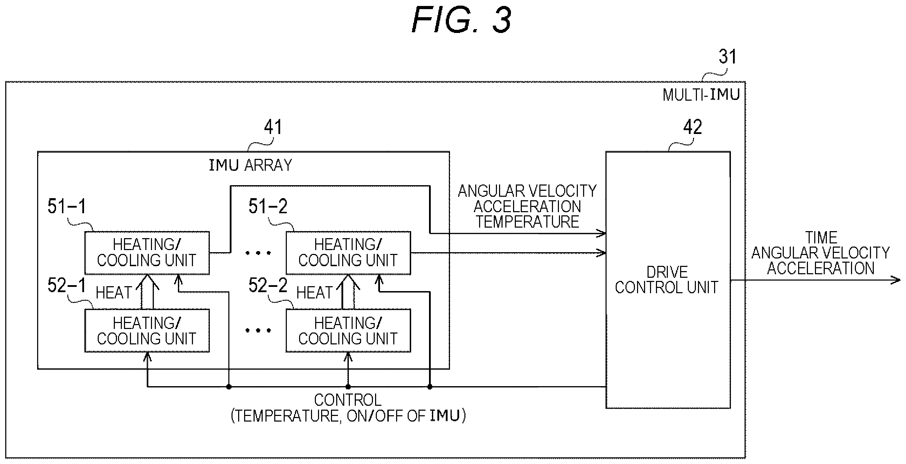

More specifically, for example, a multi-IMU 31 as illustrated in Fig. 3 is configured in the present disclosure.

That is, the multi-IMU 31 in Fig. 3 includes an IMU array 41 and a drive control unit 42.

The IMU array 41 includes IMUs 51-1 and 51-2 and heating/cooling units 52-1 and 52-2.

Note that, here, an example in which the IMU array 41 is provided with two IMUs will be described for ease of description, but the IMU array 41 may be constituted by an array of three or more IMUs.

The IMUs 51-1 and 51-2 detect the angular velocity by the configuration described above, include an accelerometer and a thermometer to detect also an acceleration and a temperature, and output the detection results to the drive control unit 42.

Each of the heating/cooling units 52-1 and 52-2 is controlled by the drive control unit 42. In a case where the drive frequencies of the IMUs 51-1 and 51-2 are the same or close to each other, the temperature of a main body is controlled by at least either heating or cooling one of the IMUs 51-1 and 51-2.

The drive control unit 42 acquires data about angular velocity, acceleration, and temperature supplied from each of the IMUs 51-1 and 51-2 of the IMU array 41, and gives a time stamp to the acquired data.

Then, the drive control unit 42 integrates information about angular velocities and accelerations of a plurality of the IMUs 51-1 and 51-2 to generate a detection result constituted by one angular velocity and acceleration of the multi-IMU 31, and outputs the detection result to the subsequent stage.

Furthermore, on the basis of time stamps indicating acquisition timings of data acquired from the plurality of the IMUs 51-1 and 51-2, the drive control unit 42 calculates the drive frequency of each of the IMUs 51-1 and 51-2, and controls the heating/cooling units 52-1 and 52-2 to control the temperatures of the IMUs 51-1 and 51-2 when the drive frequencies are the same or analogous and resonance is likely to occur, thereby changing the drive frequencies and suppressing occurrence of resonance.

That is, the individual drive frequencies in the IMUs 51-1 and 51-2 become unique in accordance with the density of each object.

Thus, in a case where the difference between the drive frequencies detected at the moment is small and there is a possibility that resonance occurs, the drive control unit 42 controls at least one of the heating/cooling units 52-1 and 52-2 to heat or cool at least one of the IMUs 51-1 and 51-2 and change the density of the object, thereby changing the drive frequency of one of the IMUs 51-1 and 51-2 and increasing the difference between the drive frequencies, so that occurrence of resonance is suppressed.

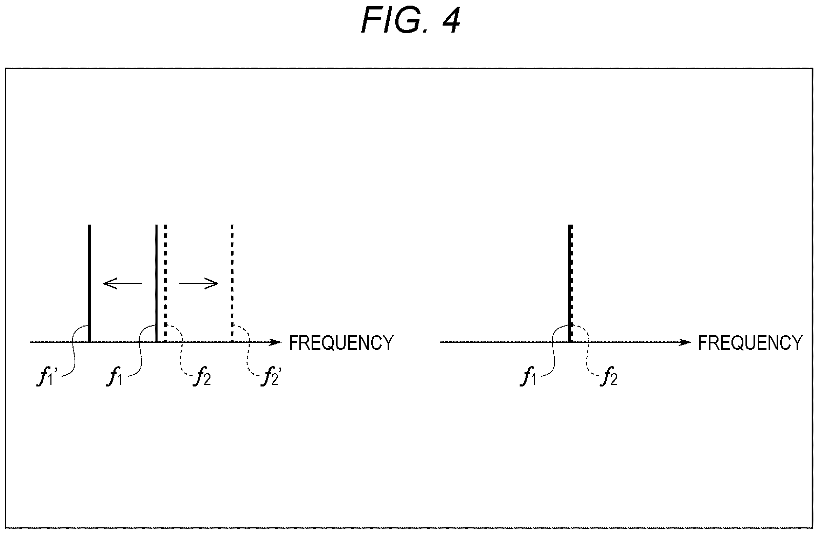

More specifically, for example, in a case where the peak frequencies of the drive frequencies of the corresponding IMUs 51-1 and 51-2 are frequencies f1 and f2, respectively, as illustrated in a left part of Fig. 4, for example, the IMU 51-1 is heated by the heating/cooling unit 52-1 so that the peak frequency f1 is decreased to a peak frequency f1', and the IMU 51-2 is cooled by the heating/cooling unit 52-2 so that the peak frequency f2 is increased to a peak frequency f2', and thus an interval larger than a predetermined value is provided between the peak frequencies, so that occurrence of resonance is suppressed.

Note that, in this case, in a case where it is possible to provide an interval larger than the predetermined value between the peak frequencies by changing the peak frequency of at least one of the IMUs 51-1 and 51-2, it is possible to operate only one of the heating/cooling units 52-1 and 52-2 to change the peak frequency, thereby suppressing occurrence of resonance.

Furthermore, in a case where, for example, the drive frequencies f1 and f2 are substantially the same as illustrated in a right part of Fig. 4 even after the heating/cooling units 52-1 and 52-2 have been controlled to heat or cool the IMUs 51-1 and 51-2 and it is not possible to increase the interval between the peak frequencies by changing the temperatures, the drive control unit 42 suppresses occurrence of resonance by stopping the operation of one of the IMUs 51-1 and 51-2.

As described above, the drive control unit 42 calculates the drive frequencies of the IMUs 51-1 and 51-2 on the basis of the acquisition timings of the pieces of data supplied from the IMUs 51-1 and 51-2, and when the peak frequency difference between the drive frequencies is small and there is a possibility that resonance occurs, the drive control unit 42 controls the heating/cooling units 52-1 and 52-2 to heat or cool at least one of the IMUs 51-1 and 51-2 so that the difference between the peak frequencies of the two becomes larger than the predetermined value or the operation of one of the IMUs 51-1 and 51-2 is stopped, thereby suppressing occurrence of resonance.

With such a configuration, it is possible to suppress occurrence of resonance even in a multi-IMU constituted by a plurality of IMUs, so that the angular velocities are detected appropriately from the plurality of IMUs, and it is therefore possible to perform angular velocity detection with high accuracy.

<<2. Preferred embodiment>>

<Configuration example of multi-IMU>

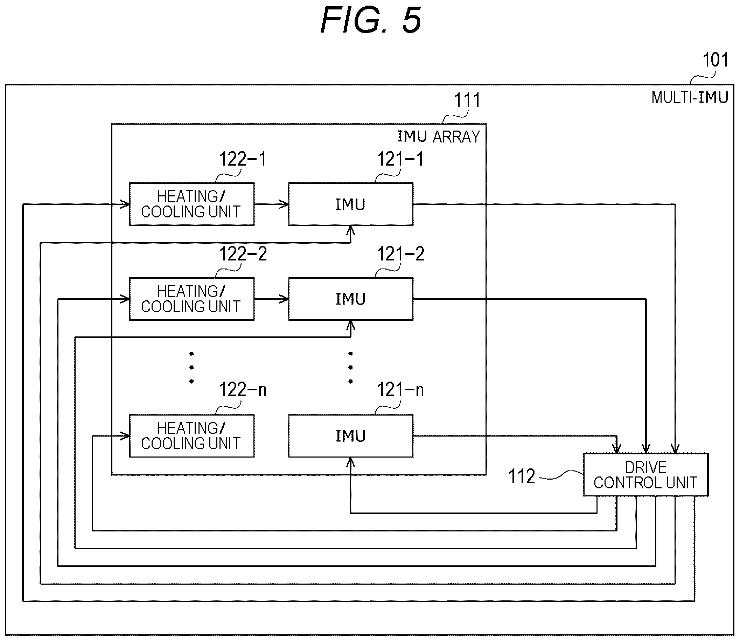

Next, a configuration example of the multi-IMU of the present disclosure will be described with reference to the block diagram in Fig. 5.

A multi-IMU 101 in Fig. 5 includes an IMU array 111 and a drive control unit 112.

The IMU array 111 is constituted by an array of IMUs 121-1 to 121-n, each of which is controlled by the drive control unit 112 and outputs, to the drive control unit 112, data about detected angular velocity, acceleration, and temperature.

Furthermore, the IMUs 121-1 to 121-n of the IMU array 111 are provided with heating/cooling units 122-1 to 122-n, each of which is constituted by a heater, a cooler, and the like. The heating/cooling units 122-1 to 122-n are controlled by the drive control unit 112 to heat or cool the IMUs 121-1 to 121-n.

Note that, hereinafter, the IMUs 121-1 to 121-n and the heating/cooling units 122-1 to 122-n are simply referred to as the IMUs 121 and the heating/cooling units 122, respectively, in a case where it is not particularly necessary to distinguish them, and other components are also referred to in a similar manner.

The drive control unit 112 is constituted by a processor, a memory, a field programmable gate array (FPGA), or the like, and controls the drive of the entire multi-IMU 101.

More specifically, the drive control unit 112 controls the heating/cooling units 122-1 to 122-n to heat or cool the IMUs 121-1 to 121-n, thereby changing the temperatures and adjusting the interval between the drive frequencies of the IMUs 121-1 to 121-n, so that occurrence of resonance is suppressed.

Furthermore, in a situation where occurrence of resonance cannot be avoided by controlling the heating/cooling units 122-1 to 122-n to heat or cool the IMUs 121-1 to 121-n and change the temperatures so that the interval between the drive frequencies of the IMUs 121-1 to 121-n is adjusted, the drive control unit 112 controls on and off of the IMUs 121 to stop the operations of the IMUs 121 except for one of a group of the IMUs 121 where resonance is likely to occur, so that the occurrence of resonance is suppressed.

<Configuration example of IMU>

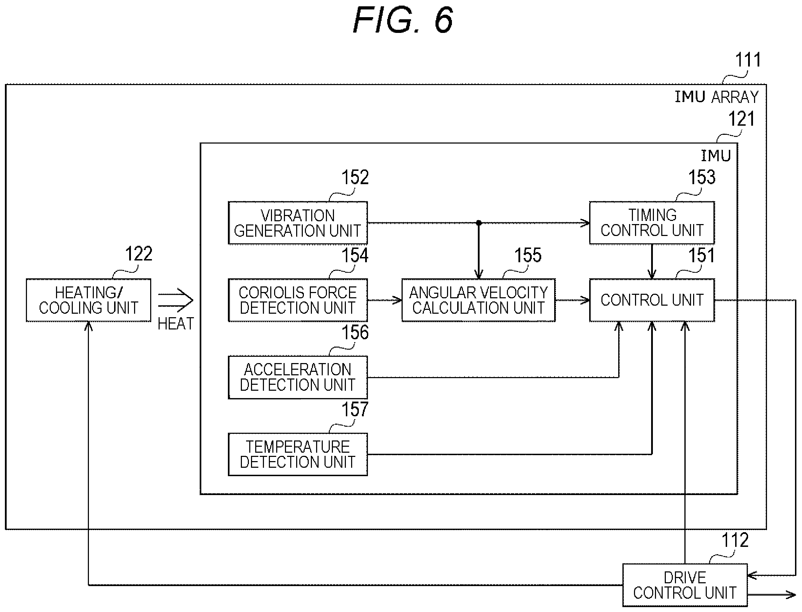

Next, a configuration example of the IMUs 121 and the heating/cooling units 122 in the IMU array 111 will be described with reference to the block diagram in Fig. 6. Note that only one set of the IMU 121 and the heating/cooling unit 122 in the IMU array 111 is displayed for convenience of description in Fig. 6, but in reality, there is a plurality of sets (n sets in Fig. 1) of the IMU 121 and the heating/cooling unit 122 as illustrated in Fig. 5.

The IMU 121 is a so-called vibratory micro electro mechanical systems (MEMS) gyro sensor, and detects the angular velocity. Furthermore, the IMU 121 further detects the acceleration and the temperature.

More specifically, the IMU 121 includes a control unit 151, a vibration generation unit 152, an orthogonal demodulation unit 153, a timing control unit 153, a Coriolis force detection unit 154, an angular velocity calculation unit 155, an acceleration detection unit 156, and a temperature detection unit 157.

The control unit 151 is constituted by a processor, a memory, and the like, and controls the entire operation of the IMU 121.

The control unit 151 outputs, to the drive control unit 112, data about angular velocity supplied from the angular velocity calculation unit 155, acceleration supplied from the acceleration detection unit 156, and temperature supplied from the temperature detection unit 157, at a timing based on an interrupt request signal for controlling the timing of supply from the timing control unit 153. More specifically, when the control unit 151 supplies an interrupt request signal generated by the timing control unit 153 to the drive control unit 112, the drive control unit 112 acquires data about angular velocity, acceleration, and temperature output from the IMU 121 via the control unit 151 at a timing based on the interrupt request signal.

Furthermore, the control unit 151 controls on or off of the operation of the IMU 121 on the basis of an on/off control signal supplied from the drive control unit 112.

The vibration generation unit 152 is, for example, a drive device in the vibratory IMU constituted by the MEMS described in the principle of operation of the IMU described above, and vibrates, at the velocity v, the object c having the mass m and constituting the IMU 121.

The timing control unit 153 generates an interrupt request signal for controlling the timing at a frequency obtained by dividing, by a predetermined value, a vibration frequency of the vibration generated by the vibration generation unit 152, and outputs the interrupt request signal to the drive control unit 112 via the control unit 151.

The Coriolis force detection unit 154 detects, for example, the Coriolis force Fc generated when the object c having the mass m of the IMU 121 constituted by the MEMS rotates at the angular velocity $\Omega$, and outputs the Coriolis force Fc to the angular velocity calculation unit 155.

On the basis of the Coriolis force Fc supplied from the Coriolis force detection unit 154, the angular velocity calculation unit 155 calculates an angular velocity by calculation based on Formula (1) described above, and outputs the angular velocity to the control unit 151.

The acceleration detection unit 156, which is constituted by an acceleration sensor or the like, detects acceleration, and outputs the acceleration to the control unit 151.

The temperature detection unit 157, which is constituted by a temperature sensor or the like, detects the temperature of the IMU 121, and outputs the temperature to the control unit 151.

The heating/cooling unit 122 is controlled by the drive control unit 112 to heat or cool the IMU 121 to a preset temperature.

<Configuration example of drive control unit>

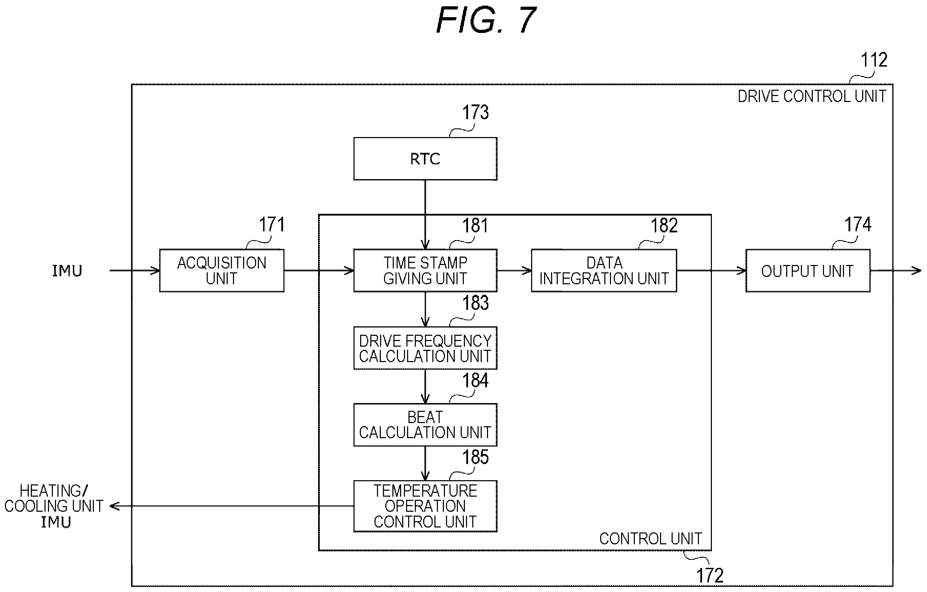

Next, a configuration example of the drive control unit 112 will be described with reference to the block diagram in Fig. 7.

The drive control unit 112 includes an acquisition unit 171, a control unit 172, an RTC 173, and an output unit 174.

The acquisition unit 171 acquires data about angular velocity, acceleration, and temperature from each of the IMUs 121-1 to 121-n at a timing based on an interrupt request signal for controlling the timing of supply from each of the IMUs 121-1 to 121-n of the IMU array 111, and supplies the data to the control unit 172.

The control unit 172, which is constituted by a processor and a memory, gives a time stamp, in accordance with the timing of acquisition, to the data about angular velocity, acceleration, and temperature supplied from the acquisition unit 171, and calculates the drive frequencies of the IMUs 121-1 to 121-n.

Furthermore, the control unit 172 determines whether resonance occurs on the basis of the calculated drive frequencies of the IMUs 121-1 to 121-n. If it is determined that resonance occurs, the control unit 172 controls the heating/cooling units 122 of a group of the IMUs 121 that cause resonance to control the temperatures of the IMUs 121 and control the drive frequencies, and thus occurrence of resonance is suppressed.

Moreover, when occurrence of resonance cannot be suppressed by adjustment of the drive frequencies by the control of the temperatures of the IMUs 121 by the heating/cooling unit 122, the control unit 172 controls the operation of at least one IMU 121 included in the group of the IMUs 121 that cause resonance to be turned off and stops the operation, and thus occurrence of resonance is suppressed.

More specifically, the control unit 172 includes a time stamp giving unit 181, a data integration unit 182, a drive frequency calculation unit 183, a beat calculation unit 184, and a temperature operation control unit 185.

On the basis of time information supplied from the real time clock (RTC) 173, the time stamp giving unit 181 gives a time stamp in accordance with the timing at which data about angular velocity, acceleration, and temperature supplied from each of the IMUs 121-1 to 121-n supplied from the acquisition unit 171 has been acquired, and supplies the time-stamped data to the data integration unit 182 and the drive frequency calculation unit 183.

The data integration unit 182 improves the detection accuracy by integrating the time-stamped data about angular velocity and acceleration of each of the IMUs 121-1 to 121-n, and controls the output unit 174 to output, to the subsequent stage, the data as detection results regarding the angular velocity and the acceleration of the multi-IMU 101.

On the basis of the time-stamped data about angular velocity, acceleration, and temperature supplied from each of the IMUs 121-1 to 121-n, the drive frequency calculation unit 183 calculates (distribution of) the drive frequencies of the vibration generation units 152 of the corresponding IMUs 121-1 to 121-n from the timing at which each piece of data is output, and outputs the calculated (distribution of) drive frequencies to the beat calculation unit 184.

That is, the data about angular velocity, acceleration, and temperature detected by each IMU 121 is acquired by the drive control unit 122 at a timing based on an interrupt request signal for controlling the timing of generation by the timing control unit 153 based on the vibration frequency generated by the vibration generation unit 152 of each IMU 121.

Thus, the data of each IMU 121 is received at a timing (thinned timing) obtained by dividing the substantial drive frequency of the vibration generation unit 152 in each IMU 121 by a predetermined value.

Thus, the drive frequency calculation unit 183 calculates (distribution of) the drive frequencies of the corresponding vibration generation units 152 on the basis of the time stamp given in association with the timing at which the data of each IMU 121 is received.

The beat calculation unit 184 calculates the difference (beat) in peak frequency between the IMUs 121 on the basis of the estimated peak frequency in the (distribution of) drive frequencies for each IMU 121 supplied from the drive frequency calculation unit 183, and supplies the difference to the temperature operation control unit 185.

The temperature operation control unit 185 determines whether resonance occurs on the basis of the difference (beat) in peak frequency. If the difference in peak frequency is smaller than a predetermined value and occurrence of resonance is expected, the temperature operation control unit 185 sets the temperature of each IMU 121 so as to increase the difference in peak frequency between the IMUs 121 to an interval that does not cause resonance.

Then, the temperature operation control unit 185 controls the heating/cooling unit 122 to heat or cool each IMU 121 to a set temperature.

More specifically, in a case where the peak frequencies in the distributions of the drive frequencies of the IMU 121-11 and the IMU 121-12 are frequencies f11 and f12, respectively, the temperature operation control unit 185 calculates a difference (beat) df11 between these frequencies by, for example, the following Formula (2).

$$df11 = |f12 - f11|$$
$$(2)$$

Here, df11 is the frequency difference (beat) between the peak frequencies f11 and f12 of the drive frequencies, between the IMU 121-11 used as a reference and the IMU 121-12.

On the basis of whether or not the frequency difference df11 is smaller than a predetermined threshold $\delta 11$, when the frequency difference df11 is smaller than the predetermined threshold $\delta 11$, the temperature operation control unit 185 determines that the drive frequencies of the IMUs 121-11 and 121-12 are at values close to each other and there is a possibility that an influence of resonance occurs.

Here, the predetermined threshold $\delta 11$ may be, for example, a value of 1/2 of a half width of the drive frequency of the IMU 121-11 used as the reference.

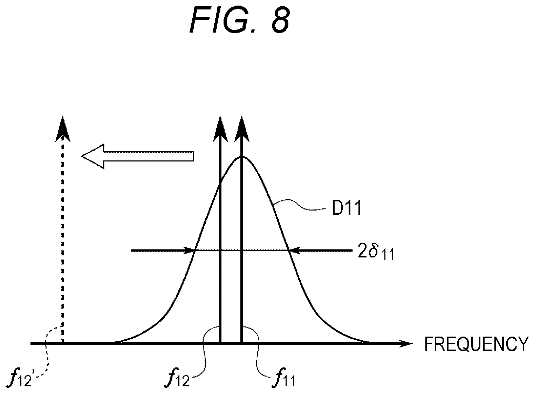

That is, as illustrated in Fig. 8, in a case where the distribution of the drive frequencies of the IMU 121-11 is expressed by a distribution D11, the half width is represented by $2\delta 11$. Note that the half width of the distribution D11 is the width of the distribution D11 when a value of 1/2 of the peak value at the peak frequency in the distribution D11 is taken.

Thus, when the frequency difference df11 is smaller than the threshold $\delta 11$, which is 1/2 of the half width, the temperature operation control unit 185 determines that resonance occurs in both of the IMUs 121-11 and 121-12 when the peak frequency f12 of the IMU 121-12 is inside the band $\delta 11$ (= 1/2 of the half width) centered on the peak frequency f11 of the drive frequency of the IMU 121-11.

Then, in a case where it is determined that resonance occurs, the temperature operation control unit 185 sets the peak frequencies of the drive frequencies of the IMUs 121-11 and 121-12 to be outside the band $\delta 11$ (= 1/2 of the half width).

Specifically, the peak frequency f12 of the drive frequency of the IMU 121-12 is shifted so that the peak frequency f12 of the drive frequency is changed so as to be increased by a target change amount $\Delta$ such that the frequency difference df11 between the peak frequencies f11 and f12 in distributions of the drive frequencies of the two IMUs 121-11 and 121-12 becomes larger than the threshold $\delta 11$.

Here, the target change amount $\Delta$ can be expressed by the following Formula (3).

$$\Delta > \delta 11 - (f11 - f12)$$
$$(3)$$

This Formula (3) is transformed into the following Formula (4).

$$\Delta > \delta 11 - (f11 - f12)$$
$$-\Delta < -\delta 11 + (f11 - f12)$$
$$f12 - \Delta < f11 - \delta 11$$
$$(4)$$

That is, the new target peak frequency of the drive frequency of the IMU 121-12 is a target peak frequency f12' (= f12 - Δ) obtained by changing the peak frequency f12 in the current distribution of the drive frequencies by the target change amount Δ (changing the peak frequency f12 so as to be distant from the peak frequency f11 by the target change amount Δ as illustrated in Fig. 8).

Thus, from the current peak frequency f12 of the IMU 121-12, the temperature operation control unit 185 sets a target temperature of the IMU 121 at which the target peak frequency f12' (= f12 - Δ) is achieved on the basis of the temperature at the moment, and controls the heating/cooling unit 122-12 to heat or cool the IMU 121 to the set target temperature.

Since the drive frequency of the IMU 121 decreases with a rise in temperature of the IMU 121 and increases with a fall in temperature, the target temperature is set on the basis of this relationship.

With this arrangement, the difference df11 between the peak frequencies in the distributions of the drive frequencies of the two IMUs 121-11 and 121-12 is controlled to be larger than the threshold δ11, and thus occurrence of resonance is suppressed.

Furthermore, in a case where control exceeding the control range of the heating/cooling unit 122 is required for achieving the target change amount Δ, the temperature operation control unit 185 cannot suppress occurrence of resonance by using the heating/cooling unit 122 to control the temperature of the IMU 121, and thus, suppresses occurrence of resonance by performing control to turn off the operation of one of the IMUs 121-11 and 121-12.

The above description shows an example of a case where the number of IMUs 121 is two, but in reality, two or more IMUs 121 are provided.

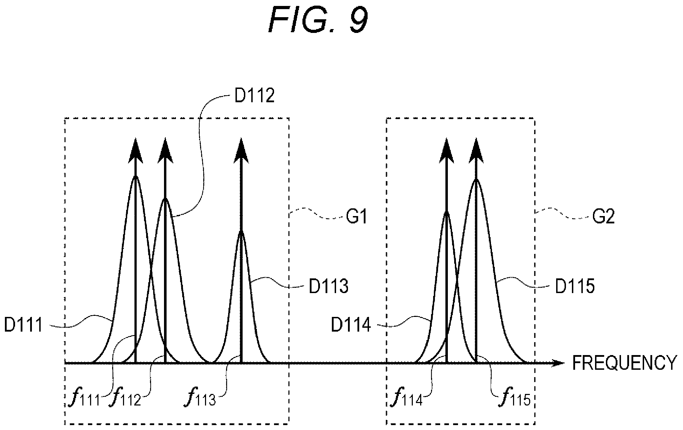

In such a case, as illustrated in Fig. 9, the temperature operation control unit 185 groups a plurality of the IMUs 121 on the basis of the peak frequency in the distribution of the drive frequencies. At this time, the temperature operation control unit 185 performs the grouping with the use of, for example, a general algorithm such as a k-means algorithm.

Then, the temperature operation control unit 185 sets a target peak frequency for each group obtained by grouping so that the peak frequency in the distribution of the drive frequencies is wider than the bandwidth (1/2 of the half width) of each distribution, and sets, as a target temperature, the temperature for driving with the distribution of the drive frequencies of the set target peak frequency.

Here, Fig. 9 illustrates drive frequency distributions D111 to D115 of corresponding IMUs 121-111 to 121-115. Here, the peak frequencies of the drive frequency distributions D111 to D115 are peak frequencies f111 to f115, respectively.

In a case as illustrated in Fig. 9, the temperature operation control unit 185 groups the drive frequency distributions D111 to D113 having drive frequencies with peak frequencies close to each other into the same group G1, and groups the drive frequency distributions D114 to D115 into the same group G2.

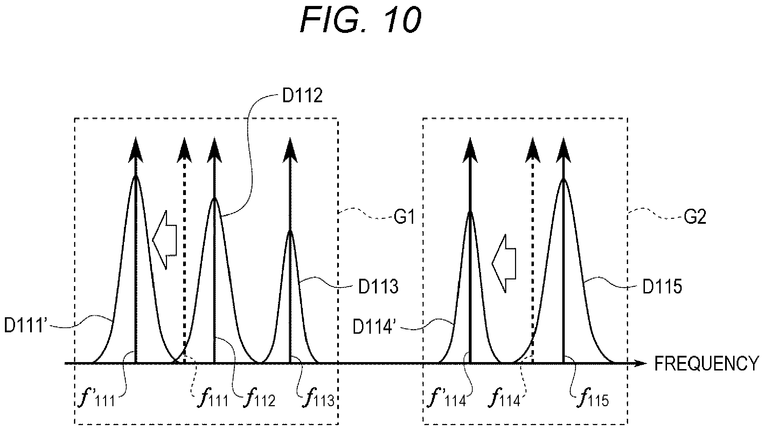

Furthermore, as illustrated in Fig. 10, the temperature operation control unit 185 sets a target peak frequency such that the interval between the peak frequencies in the drive frequency distribution is wider than the bandwidth (1/2 of the half width) of the drive frequency distribution described above for each group, and sets a target temperature for driving at the set target peak frequency.

Then, on the basis of the target temperature and the current temperature of each of the IMUs 121-111 to 121-115, the temperature operation control unit 185 controls corresponding heating/cooling units 122-111 to 122-115 to perform heating or cooling so that the set target temperature can be achieved.

In Fig. 10, among the drive frequency distributions D111 to D113 of the group G1, the peak frequency f111 of the drive frequency distribution D111 is situated so that the distance to the peak frequency f112 of the drive frequency distribution D112 is smaller than the bandwidth (1/2 of the half width) of the drive frequency distribution D112, and thus resonance occurs.

Thus, for example, the temperature operation control unit 185 sets a peak frequency f111', in which the distance from the peak frequency f112 of the drive frequency distribution D112 is greater than the bandwidth (1/2 of the half width), as a target peak frequency for the peak frequency f111 of the drive frequency distribution D111.

Moreover, the temperature operation control unit 185 sets a target temperature of the IMU 121-111 so that a drive frequency distribution D111' corresponding to the peak frequency f111' is obtained, and controls the heating/cooling unit 122-111 to heat (or cool) the IMU 121-111 so that the set target temperature can be achieved.

Furthermore, as for the drive frequency distributions D114 and D115 of the group G2, the peak frequency f114 of the drive frequency distribution D114 is situated so that the distance to the peak frequency f115 of the drive frequency distribution D115 is smaller than the bandwidth (1/2 of the half width) of the drive frequency distribution D115, and thus resonance occurs.

Thus, for example, the temperature operation control unit 185 sets a peak frequency f114', in which the distance to the peak frequency f115 of the drive frequency distribution D115 is greater than the bandwidth (1/2 of the half width), as a target peak frequency for the peak frequency f114 of the drive frequency distribution D114.

Moreover, the temperature operation control unit 185 sets a target temperature of the IMU 121-114 so that a drive frequency distribution D114' corresponding to the peak frequency f114' is obtained, and controls the heating/cooling unit 122-114 to heat (or cool) the IMU 121-114 so that the set target temperature can be achieved.

By such control, it is possible to prevent the peak frequencies of the drive frequencies between the IMUs 121 from falling within a range smaller than the bandwidth (1/2 of the half width) in the drive frequency distribution, so that occurrence of resonance is suppressed, and it is possible to achieve appropriate angular velocity detection for the entire multi-IMU 101.

Note that the above description shows an example in which, of the peak frequencies of the two IMUs 121 in which resonance occurs, the peak frequency on a side in which the frequency is lower is decreased. This can be said to be an example in which the interval between the peak frequencies is made wider than the bandwidth by processing in which, of the peak frequencies of the two IMUs 121 in which resonance occurs, the temperature of the IMU 121 on the lower frequency side is increased so that the peak frequency is decreased.

Alternatively, the interval between the peak frequencies may be made wider than the bandwidth by processing in which, of the peak frequencies of the two IMUs 121 in which resonance occurs, the temperature of the IMU 121 on a side in which the frequency is higher is lowered so that the peak frequency is increased.

Furthermore, both pieces of processing described above may be performed so that the interval between the peak frequencies is made wider than the bandwidth.

Moreover, the above description shows an example of a case where the heating/cooling unit 122 performs heating or cooling to achieve the preset temperature of the IMU 121. However, in a case where the heating/cooling unit 122 cannot perform heating or cooling any more, it is not possible to achieve the set target temperature of the IMU 121.

Thus, in such a case, the temperature operation control unit 185 turns on the operation of one of the IMUs 121-111 and 121-112 and turns off the operation of the rest for the group G1, and turns on the operation of one of the IMUs 121-114 and 121-115 and turns off the operation of the rest for the group G2, and thus occurrence of resonance is suppressed.

As a result, even in a case where the preset temperature of the IMU 121 cannot be achieved by heating or cooling by the heating/cooling unit 122, it is possible to achieve appropriate angular velocity detection for the entire multi-IMU 101.

Note that, in a case where the peak frequencies of three or more IMUs 121 are included in the bandwidth, any one of the IMUs 121 may be controlled to be turned on and the rest of the IMUs 121 may be controlled to be turned off, so that occurrence of resonance is suppressed.

<Drive control processing>

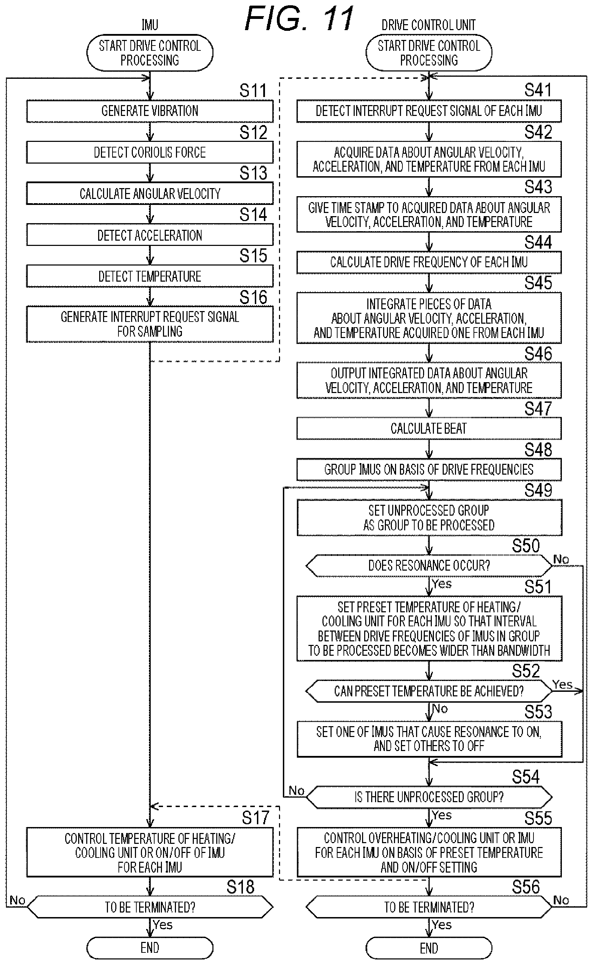

Next, drive control processing by the multi-IMU 101 in Fig. 5 will be described with reference to the flowchart in Fig. 11.

In step S11, for example, the vibration generation unit 152 vibrates, at the velocity v, the object c having the mass m and constituting the vibratory gyro sensor using the MEMS. Note that, at this time, the object c rotates about a predetermined axis Ax at a predetermined angular velocity Q.

In step S12, the Coriolis force detection unit 154 detects the Coriolis force Fc generated in the object c due to vibration generated by the vibration generation unit 152, and outputs the Coriolis force Fc to the angular velocity calculation unit 155.

In step S13, the angular velocity calculation unit 155 calculates the angular velocity $\Omega$ in the IMU 121 on the basis of the Coriolis force Fc, and outputs the angular velocity $\Omega$ to the control unit 151.

In step S14, the acceleration detection unit 156 detects the acceleration of the IMU 121, and outputs data about the detected acceleration to the control unit 151.

In step S15, the temperature detection unit 157 detects the temperature of the IMU 121, and outputs data about the detected temperature to the control unit 151.

In step S16, the timing control unit 153 generates an interrupt request signal for performing sampling control on the basis of the drive frequency of the vibratory gyro (vibration generation unit 152), and outputs the interrupt request signal to the control unit 151 together with an identifier for identifying the IMU 121. This interrupt request signal is output to the drive control unit 112 via the control unit 151 together with the identifier for identifying the IMU 121. Furthermore, by the processing of steps S13 to S15, data about angular velocity, acceleration, and temperature is brought into a state in which the drive control unit 112 can acquire together with the identifier for identifying the IMU 121.

In step S41, the acquisition unit 171 of the drive control unit 112 detects the interrupt request signal from the IMU 121.

In step S42, the acquisition unit 171 acquires the data about angular velocity, acceleration, and temperature output from the IMU 121 together with the identifier for identifying the IMU 121 on the basis of the interrupt request signal, and supplies the data to the control unit 172.

In step S43, the time stamp giving unit 181 of the control unit 172 gives a time stamp in accordance with the timing at which the data about angular velocity, acceleration, and temperature supplied from the acquisition unit 171 has been received on the basis of time information generated by the RTC 173, and outputs the time-stamped data to the data integration unit 182 and the drive frequency calculation unit 183.

In step S44, the drive frequency calculation unit 183 calculates the drive frequency of the IMU 121 on the basis of the time stamp that has been given together with the data about angular velocity, acceleration, and temperature supplied from the time stamp giving unit 181, and outputs the drive frequency together with the identifier for identifying the IMU 121 and the data about temperature to the beat calculation unit 184.

Note that the processing of steps S41 to S44 is repeated every time an interrupt request signal is supplied from a plurality of the IMUs 121.

The subsequent processing is assumed to be processing after the data about angular velocity, acceleration, and temperature has been acquired from the plurality of the IMUs 121.

In step S45, the data integration unit 182 integrates pieces of the data about angular velocity and acceleration supplied from the plurality of the IMUs 121 into one piece of data, generates an angular velocity and an acceleration as a detection result for the multi-IMU 101, and outputs the angular velocity and the acceleration to the output unit 174.

In step S46, the output unit 174 outputs the angular velocity and the acceleration as the detection result for the multi-IMU 101.

In step S47, the beat calculation unit 184 calculates a beat that is a difference in peak frequency in the distribution of the drive frequencies between the plurality of the IMUs 121, and outputs the calculated beat and temperature data to the temperature operation control unit 185.

In step S48, on the basis of the beat that is a difference in peak frequency in the distribution of the drive frequencies between the plurality of the IMUs 121, the temperature operation control unit 185 groups the IMUs 121 having drive frequencies with peak frequencies close to each other with the use of, for example, a general algorithm such as a k-means algorithm.

In step S49, the temperature operation control unit 185 sets one of unprocessed groups as a group to be processed.

In step S50, the temperature operation control unit 185 determines whether or not the group to be processed includes IMUs 121 in which the interval between the peak frequencies of the drive frequency distribution is narrower and smaller than the bandwidth (1/2 of the half width), and there is a possibility that resonance occurs.

In a case where it is determined in step S50 that there is a possibility that resonance occurs, the processing proceeds to step S51.

In step S51, as described with reference to Figs. 9 and 10, the temperature operation control unit 185 sets the target temperature of the IMU 121 for controlling the drive frequency so that the interval between the peak frequencies of the drive frequency can be made wider than the bandwidth (1/2 of the half width).

In step S52, the temperature operation control unit 185 determines whether or not the set target temperature can be achieved on the basis of the operation state of the heating/cooling unit 122. That is, it is determined whether or not the preset temperature can be achieved by heating or cooling by the heating/cooling unit 122. For example, in a case where the current heating state of the heating/cooling unit 122 has reached a maximum value but a temperature higher than that has been set, it is determined that the preset temperature cannot be achieved by the heating/cooling unit 122.

In a case where it is determined in step S52 that the set target temperature cannot be achieved, the processing proceeds to step S53.

In step S53, since the preset temperature of the IMU 121 cannot be achieved by the heating/cooling unit 122, the temperature operation control unit 185 performs setting such that the operation of one of the IMUs 121 between which there is a possibility that resonance occurs is turned on and the operation of the rest is turned off (operation is stopped) in order to suppress occurrence of resonance. That is, in this case, temperature control by the heating/cooling unit 122 is not performed, and on/off setting is performed such that only one of the IMUs 121 that cause resonance is turned on to operate, and the operation of the rest is stopped.

On the other hand, in a case where it is determined in step S52 that the set target temperature can be achieved, the processing of step S53 is skipped. That is, in this case, the heating/cooling unit 122 heats or cools the corresponding IMU 121 on the basis of the preset temperature, the drive frequency is controlled, and occurrence of resonance is suppressed.

Furthermore, in a case where it is determined in step S50 that there is no possibility that resonance occurs, the processing of steps S51 to S53 is skipped.

In step S54, the temperature operation control unit 185 determines whether or not there is an unprocessed group in the grouped groups. In a case where there is an unprocessed group, the processing returns to step S49.

That is, whether resonance occurs is determined for all the groups. In a case where there is a possibility that resonance occurs, the temperature of the IMU 121 for suppressing occurrence of resonance by heating or cooling by the heating/cooling unit 122 is set as a preset temperature. Moreover, when the preset temperature cannot be achieved by the heating/cooling unit 122, on/off setting is performed so that the operation of the IMU 121 is stopped. Note that, in a case where there is no possibility that resonance occurs, both the preset temperature controlled by the heating/cooling unit 122 and the on/off setting of the IMU 121 are kept as they are.

Then, in step S54, in a case where it is determined that the processing has been performed for all the groups and there is no unprocessed group, the processing proceeds to step S55.

In step S55, the temperature operation control unit 185 controls heating or cooling by the heating/cooling unit 122 of the IMU array 111 on the basis of the preset temperature, and controls on or off of the IMU 121 on the basis of the on/off setting.

In step S17, the heating/cooling unit 122 of the IMU array 111 is controlled by the temperature operation control unit 185 to heat or cool each IMU 121 to a preset temperature, and the IMU 121 is controlled by the temperature operation control unit 185 to be turned on or off on the basis of the on/off setting.

In step S18 or S56, the control unit 151 and the control unit 172 determine whether or not an instruction to terminate the operation has been given. In a case where a termination instruction has not been given, the processing returns to step S11 or S41.

That is, the processing of steps S11 to S18 and steps S41 to S56 is repeated until a termination instruction is given.

Then, in a case where a termination instruction has been given in step S18 or S56, the processing is terminated.

By performing the series of processing described above, the drive frequency of each IMU 121 is calculated on the basis of the timing at which data about angular velocity, acceleration, and temperature is supplied, and whether resonance occurs between the IMUs 121 is determined from the interval between the peak frequencies.

Then, in a case where it is determined that there is a possibility that resonance occurs, the temperatures of the IMUs 121 are set so that the interval between the peak frequencies of the drive frequencies between the IMUs 121 in which there is a possibility that resonance occurs is changed to be wider than the bandwidth, and the heating/cooling units 122 are controlled to heat or cool the IMUs 121 to the set temperatures.

Here, when the temperature control by the heating/cooling unit 122 cannot be performed, the operation of one of the IMUs 121 in the group in which resonance occurs is turned on, and the rest is set to off.

As a result, it is possible to suppress occurrence of resonance generated by the multi-IMU 101 constituted by a plurality of the IMUs 121, and thus, it is possible to achieve appropriate angular velocity detection.

Note that the above description shows an example in which occurrence of resonance is suppressed by controlling the drive frequency of each IMU 121 such that the interval between the peak frequencies becomes wider than the bandwidth. Alternatively, at this time, the drive frequency may be shifted to a frequency band that allows for removal by a filter (not illustrated) in the IMU 121.

Furthermore, for suppression of a beat, adjustment of a sampling rate related to the sampling control or setting of a filter (not illustrated) in the IMU 121 may be used.

<<3. Example of execution by software>>

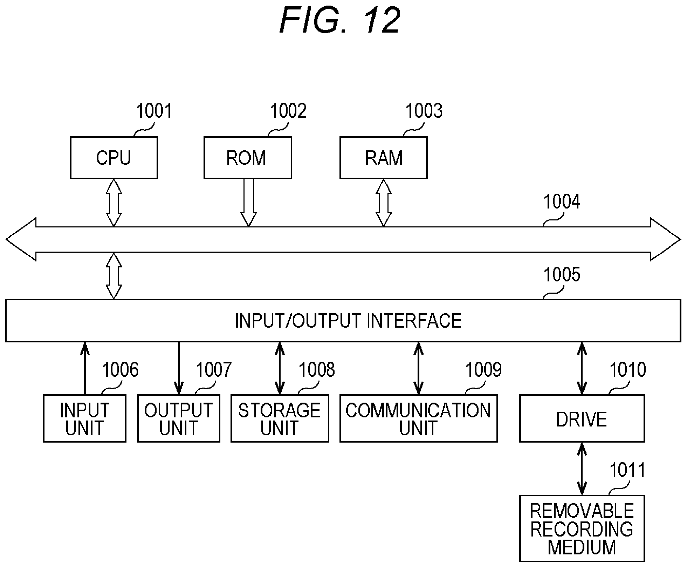

Fig. 12 illustrates a configuration example of a general-purpose computer. This personal computer has a built-in central processing unit (CPU) 1001. The CPU 1001 is connected with an input/output interface 1005 via a bus 1004. The bus 1004 is connected with a read only memory (ROM) 1002 and a random access memory (RAM) 1003.

The input/output interface 1005 is connected with an input unit 1006, an output unit 1007, a storage unit 1008, and a communication unit 1009. The input unit 1006 includes an input device such as a keyboard and a mouse used by a user to input an operation command. An output unit 1007 outputs a processing operation screen and an image of a processing result to a display device. The storage unit 1008 includes a hard disc drive or the like for storing programs and various types of data. The communication unit 1009 includes a local area network (LAN) adapter or the like and executes communication processing via a network as represented by the Internet. Furthermore, the input/output interface 1005 is connected with a drive 1010 that reads and writes data from and to a removable storage medium 1011 such as a magnetic disc (including a flexible disc), an optical disc (including a compact disc-read only memory (CD-ROM) and a digital versatile disc (DVD)), a magneto-optical disc (including Mini Disc (MD)), or a semiconductor memory.

The CPU 1001 executes various types of processing according to a program stored in the ROM 1002 or a program that is read from the removable storage medium 1011 such as a magnetic disc, an optical disc, a magneto-optical disc, or a semiconductor memory, installed in the storage unit 1008, and loaded from the storage unit 1008 into the RAM 1003. The RAM 1003 also stores, as appropriate, data or the like necessary for the CPU 1001 to execute various types of processing.

To perform the series of pieces of processing described above, the computer configured as described above causes the CPU 1001 to, for example, load a program stored in the storage unit 1008 into the RAM 1003 via the input/output interface 1005 and the bus 1004 and then execute the program.

The program to be executed by the computer (CPU 1001) can be provided by, for example, being recorded on the removable storage medium 1011 as a package medium or the like. Furthermore, the program can be provided via a wired or wireless transmission medium such as a local area network, the Internet, or digital satellite broadcasting.

Inserting the removable storage medium 1011 into the drive 1010 allows the computer to install the program into the storage unit 1008 via the input/output interface 1005. Furthermore, the program can be received by the communication unit 1009 via a wired or wireless transmission medium and installed into the storage unit 1008. In addition, the program can be installed in advance in the ROM 1002 or the storage unit 1008.

Note that the program to be executed by the computer may be a program that performs the pieces of processing in chronological order as described in the present specification, or may be a program that performs the pieces of processing in parallel or when needed, for example, when the processing is called.

Note that the CPU 1001 in Fig. 12 implements the functions of the control units 151 and 172 in Figs. 6 and 7.

Furthermore, in the present specification, a system means a set of a plurality of components (devices, modules (parts), and the like), and it does not matter whether or not all components are in the same housing. Thus, a plurality of devices housed in separate housings and connected via a network, and one device having a plurality of modules housed in one housing are both systems.

Note that embodiments of the present disclosure are not limited to the embodiment described above, and can be modified in various ways within a scope of the present disclosure.

For example, the present disclosure can have a cloud computing configuration in which a plurality of devices shares one function and collaborates in processing via a network.

Furthermore, each step described in the flowchart described above can be executed by one device or can be shared by a plurality of devices.

Moreover, in a case where a plurality of pieces of processing is included in one step, the plurality of pieces of processing included in that step can be executed by one device or can be shared by a plurality of devices.

Note that the present disclosure can also be configured as described below.

<1> A drive control device including:

an acquisition unit configured to acquire angular velocities supplied from a plurality of inertial measurement units (IMUs);
a drive frequency calculation unit configured to calculate drive frequencies of the plurality of IMUs on the basis of acquisition timings of the angular velocities acquired by the acquisition unit; and
a control unit configured to control the plurality of IMUs on the basis of the drive frequencies of the plurality of IMUs.

<2> The drive control device according to <1>, in which
the control unit controls temperatures of the IMUs in a case where an interval between peak frequencies of the drive frequencies is narrower than a predetermined value on the basis of the drive frequencies of the plurality of IMUs.
<3> The drive control device according to <2>, in which
on the basis of the drive frequencies of the plurality of IMUs, in a case where the interval between the peak frequencies of the drive frequencies is narrower than a predetermined value, the control unit controls the temperatures in such a way as to make the interval between the peak frequencies of the IMUs wider than the predetermined value.
<4> The drive control device according to <2>, in which
on the basis of the drive frequencies of the plurality of IMUs, in a case where the interval between the peak frequencies of the drive frequencies is narrower than a predetermined value, the control unit controls the temperatures in such a way as to increase the peak frequency by lowering a temperature of the IMU on a side in which the peak frequency is higher and make the interval between the peak frequencies of the IMUs wider than the predetermined value.
<5> The drive control device according to <2>, in which
on the basis of the drive frequencies of the plurality of IMUs, in a case where the interval between the peak frequencies of the drive frequencies is narrower than a predetermined value, the control unit controls the temperatures in such a way as to decrease the peak frequency by increasing the temperature of the IMU on a side in which the peak frequency is lower and make the interval between the peak frequencies of the IMUs wider than the predetermined value.
<6> The drive control device according to <2>, in which

on the basis of the drive frequencies of the plurality of IMUs, in a case where the interval between the peak frequencies of the drive frequencies is narrower than a predetermined value, the control unit controls the temperatures in such a way as to make the interval between the peak frequencies of the IMUs wider than the predetermined value by lowering the temperature of the IMU on a side in which the peak frequency is higher in such a way as to increase the peak frequency on the higher side, and increasing the temperature of the IMU on a side in which the peak frequency is lower in such a way as to decrease the peak frequency on the lower side.

<7> The drive control device according to <3>, in which

the control unit groups the IMUs into a plurality of groups on the basis of the peak frequencies of the drive frequencies of the plurality of IMUs, and, for each of the groups, in a case where the interval between the peak frequencies is narrower than a predetermined value, controls the temperatures in such a way as to make the interval between the peak frequencies of the IMUs wider than the predetermined value.

<8> The drive control device according to <2>, in which

the predetermined value is a bandwidth of 1/2 of a half width in a distribution of the drive frequencies.

<9> The drive control device according to <2>, in which

the control unit calculates a beat that is a difference between the peak frequencies of the drive frequencies on the basis of the drive frequencies of the plurality of IMUs, and controls the temperatures of the IMUs on the basis of the beat in a case where the interval is narrower than a predetermined value.

<10> The drive control device according to <3>, in which

on the basis of the drive frequencies of the plurality of IMUs, in a case where the interval between the peak frequencies of the drive frequencies is narrower than a predetermined value and it is not possible to control the temperatures in such a way as to make the interval between the peak frequencies of the IMUs wider than the predetermined value, the control unit performs control to operate one of the IMUs in which the interval between the peak frequencies of the drive frequencies is narrower than the predetermined value and stop other IMUs.

<11> The drive control device according to any one of <1> to <10>, in which

the control unit gives a time stamp to each of the acquired angular velocities on the basis of the acquisition timings of the angular velocities acquired by the acquisition unit, and calculates the drive frequencies of the plurality of IMUs on the basis of the time stamps.

<12> The drive control device according to any one of <1> to <11>, further including:

a heating/cooling unit configured to apply at least either heating or cooling to the IMUs to adjust temperatures of the IMUs,
in which the control unit controls the temperatures of the plurality of IMUs by controlling the heating/cooling unit on the basis of the drive frequencies of the plurality of IMUs.

<13> The drive control device according to any one of <1> to <12>, in which
the IMUs include vibratory micro electro mechanical systems (MEMS) gyro sensors.

<14> A drive control method including the steps of:

acquiring angular velocities supplied from a plurality of inertial measurement units (IMUs);
calculating drive frequencies of the plurality of IMUs on the basis of acquisition timings of the acquired angular velocities; and
controlling the plurality of IMUs on the basis of the drive frequencies of the plurality of IMUs.

<15> A program for causing a computer to function as:

an acquisition unit configured to acquire angular velocities supplied from a plurality of inertial measurement units (IMUs);
a drive frequency calculation unit configured to calculate drive frequencies of the plurality of IMUs on the basis of acquisition timings of the angular velocities acquired by the acquisition unit; and
a control unit configured to control the plurality of IMUs on the basis of the drive frequencies of the plurality of IMUs.

REFERENCE SIGNS LIST

| 101 | Multi-inertial measurement unit (IMU) |
| 111 | IMU array |
| 112 | Drive control unit |

| 121, 121-1 to 121 | -nIMU |
| 122, 122-1 to 122 | -nHeating/cooling unit |
| 11 | Control unit |
| 152 | Vibration generation unit |
| 153 | Timing control unit |
| 154 | Coriolis force detection unit |
| 155 | Angular velocity detection unit |
| 156 | Temperature detection unit |
| 171 | Acquisition unit |
| 172 | Control unit |
| 173 | Real time clock (RTC) |
| 174 | Output unit |
| 181 | Time stamp giving unit |
| 182 | Data integration unit |
| 183 | Drive frequency calculation unit |
| 184 | Beat calculation unit |
| 185 | Temperature operation control unit |

**Claims**

1. A drive control device comprising:

   an acquisition unit configured to acquire angular velocities supplied from a plurality of inertial measurement units (IMUs);
   a drive frequency calculation unit configured to calculate drive frequencies of the plurality of IMUs on a basis of acquisition timings of the angular velocities acquired by the acquisition unit; and
   a control unit configured to control the plurality of IMUs on a basis of the drive frequencies of the plurality of IMUs.

2. The drive control device according to claim 1, wherein
   the control unit controls temperatures of the IMUs in a case where an interval between peak frequencies of the drive frequencies is narrower than a predetermined value on the basis of the drive frequencies of the plurality of IMUs.

3. The drive control device according to claim 2, wherein
   on the basis of the drive frequencies of the plurality of IMUs, in a case where the interval between the peak frequencies of the drive frequencies is narrower than a predetermined value, the control unit controls the temperatures in such a way as to make the interval between the peak frequencies of the IMUs wider than the predetermined value.

4. The drive control device according to claim 2, wherein
   on the basis of the drive frequencies of the plurality of IMUs, in a case where the interval between the peak frequencies of the drive frequencies is narrower than a predetermined value, the control unit controls the temperatures in such a way as to increase the peak frequency by lowering a temperature of the IMU on a side in which the peak frequency is higher and make the interval between the peak frequencies of the IMUs wider than the predetermined value.

5. The drive control device according to claim 2, wherein
   on the basis of the drive frequencies of the plurality of IMUs, in a case where the interval between the peak frequencies of the drive frequencies is narrower than a predetermined value, the control unit controls the temperatures in such a way as to decrease the peak frequency by increasing the temperature of the IMU on a side in which the peak frequency is lower and make the interval between the peak frequencies of the IMUs wider than the predetermined value.

6. The drive control device according to claim 2, wherein
   on the basis of the drive frequencies of the plurality of IMUs, in a case where the interval between the peak frequencies of the drive frequencies is narrower than a predetermined value, the control unit controls the temperatures in such a way as to make the interval between the peak frequencies of the IMUs wider than the predetermined value by lowering the temperature of the IMU on a side in which the peak frequency is higher in such a way as to increase the peak frequency on the higher side, and increasing the temperature of the IMU on a side in which the peak frequency is lower in such a way as to decrease the peak frequency on the lower side.

7. The drive control device according to claim 3, wherein
the control unit groups the IMUs into a plurality of groups on a basis of the peak frequencies of the drive frequencies of the plurality of IMUs, and, for each of the groups, in a case where the interval between the peak frequencies is narrower than a predetermined value, controls the temperatures in such a way as to make the interval between the peak frequencies of the IMUs wider than the predetermined value.

8. The drive control device according to claim 2, wherein
the predetermined value is a bandwidth of 1/2 of a half width in a distribution of the drive frequencies.

9. The drive control device according to claim 2, wherein
the control unit calculates a beat that is a difference between the peak frequencies of the drive frequencies on the basis of the drive frequencies of the plurality of IMUs, and controls the temperatures of the IMUs on a basis of the beat in a case where the interval is narrower than a predetermined value.

10. The drive control device according to claim 3, wherein
on the basis of the drive frequencies of the plurality of IMUs, in a case where the interval between the peak frequencies of the drive frequencies is narrower than a predetermined value and it is not possible to control the temperatures in such a way as to make the interval between the peak frequencies of the IMUs wider than the predetermined value, the control unit performs control to operate one of the IMUs in which the interval between the peak frequencies of the drive frequencies is narrower than the predetermined value and stop other IMUs.

11. The drive control device according to claim 1, wherein
the control unit gives a time stamp to each of the acquired angular velocities on the basis of the acquisition timings of the angular velocities acquired by the acquisition unit, and calculates the drive frequencies of the plurality of IMUs on a basis of the time stamps.

12. The drive control device according to claim 1, further comprising:

a heating/cooling unit configured to apply at least either heating or cooling to the IMUs to adjust temperatures of the IMUs,
wherein the control unit controls the temperatures of the plurality of IMUs by controlling the heating/cooling unit on the basis of the drive frequencies of the plurality of IMUs.

13. The drive control device according to claim 1, wherein
the IMUs include vibratory micro electro mechanical systems (MEMS) gyro sensors.

14. A drive control method comprising the steps of:

acquiring angular velocities supplied from a plurality of inertial measurement units (IMUs);
calculating drive frequencies of the plurality of IMUs on a basis of acquisition timings of the acquired angular velocities; and
controlling the plurality of IMUs on a basis of the drive frequencies of the plurality of IMUs.

15. A program for causing a computer to function as:

an acquisition unit configured to acquire angular velocities supplied from a plurality of inertial measurement units (IMUs);
a drive frequency calculation unit configured to calculate drive frequencies of the plurality of IMUs on a basis of acquisition timings of the angular velocities acquired by the acquisition unit; and
a control unit configured to control the plurality of IMUs on a basis of the drive frequencies of the plurality of IMUs.

## FIG. 1

# FIG. 2

# FIG. 3

FIG. 4

## FIG. 5

# FIG. 6

EP 4 083 637 A1

# FIG. 7

## FIG. 8

FREQUENCY

$f_{12}'$     $f_{12}$     $f_{11}$

D11

$2\delta_{11}$

FIG. 9

EP 4 083 637 A1

EP 4 083 637 A1

# FIG. 10

# FIG. 11

IMU
START DRIVE CONTROL PROCESSING

DRIVE CONTROL UNIT
START DRIVE CONTROL PROCESSING

**S11**
GENERATE VIBRATION

**S12**
DETECT CORIOLIS FORCE

**S13**
CALCULATE ANGULAR VELOCITY

**S14**
DETECT ACCELERATION

**S15**
DETECT TEMPERATURE

**S16**
GENERATE INTERRUPT REQUEST SIGNAL FOR SAMPLING

**S41**
DETECT INTERRUPT REQUEST SIGNAL OF EACH IMU

**S42**
ACQUIRE DATA ABOUT ANGULAR VELOCITY, ACCELERATION, AND TEMPERATURE FROM EACH IMU

**S43**
GIVE TIME STAMP TO ACQUIRED DATA ABOUT ANGULAR VELOCITY, ACCELERATION, AND TEMPERATURE

**S44**
CALCULATE DRIVE FREQUENCY OF EACH IMU

**S45**
INTEGRATE PIECES OF DATA ABOUT ANGULAR VELOCITY, ACCELERATION, AND TEMPERATURE ACQUIRED ONE FROM EACH IMU

**S46**
OUTPUT INTEGRATED DATA ABOUT ANGULAR VELOCITY, ACCELERATION, AND TEMPERATURE

**S47**
CALCULATE BEAT

**S48**
GROUP IMUS ON BASIS OF DRIVE FREQUENCIES

**S49**
SET UNPROCESSED GROUP AS GROUP TO BE PROCESSED

**S50**
DOES RESONANCE OCCUR? —No
↓Yes

**S51**
SET PRESET TEMPERATURE OF HEATING/ COOLING UNIT FOR EACH IMU SO THAT INTERVAL BETWEEN DRIVE FREQUENCIES OF IMUS IN GROUP TO BE PROCESSED BECOMES WIDER THAN BANDWIDTH

**S52**
CAN PRESET TEMPERATURE BE ACHIEVED? —Yes
↓No

**S53**
SET ONE OF IMUS THAT CAUSE RESONANCE TO ON, AND SET OTHERS TO OFF

**S54**
No— IS THERE UNPROCESSED GROUP?
↓Yes

**S17**
CONTROL TEMPERATURE OF HEATING/ COOLING UNIT OR ON/OFF OF IMU FOR EACH IMU

**S55**
CONTROL OVERHEATING/COOLING UNIT OR IMU FOR EACH IMU ON BASIS OF PRESET TEMPERATURE AND ON/OFF SETTING

**S18**
No— TO BE TERMINATED?
↓Yes
END

**S56**
TO BE TERMINATED? —No
↓Yes
END

## FIG. 12

EP 4 083 637 A1

**EP 4 083 637 A1**

<table>
<tr><td colspan="2" align="center">INTERNATIONAL SEARCH REPORT</td><td>International application No.</td></tr>
<tr><td colspan="2"></td><td>PCT/JP2020/046246</td></tr>
</table>

**A. CLASSIFICATION OF SUBJECT MATTER**
G01P 21/00(2006.01)i; G01C 19/5776(2012.01)i
FI: G01P21/00; G01C19/5776

According to International Patent Classification (IPC) or to both national classification and IPC

**B. FIELDS SEARCHED**

Minimum documentation searched (classification system followed by classification symbols)
G01P15/00-21/02; G01C19/00-19/72

Documentation searched other than minimum documentation to the extent that such documents are included in the fields searched

| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2009-186213 A (DENSO CORP.) 20 August 2009 (2009-08-20) entire text, all drawings | 1–15 |
| A | EP 3279609 A1 (STMICROELECTRONICS S. R. L.) 07 February 2018 (2018-02-07) entire text, all drawings | 1–15 |
| A | JP 2011-191304 A (COMMISSARIAT A L'ENERGIE ATOMIQUE ET AUX ENERGIES ALTERNATIVES) 29 September 2011 (2011-09-29) entire text, all drawings | 1–15 |
| A | WO 2009/060531 A1 (FUJITSU LTD.) 14 May 2009 (2009-05-14) entire text, all drawings | 1–15 |
| A | JP 2005-43098 A (TOYOTA MOTOR CORP.) 17 February 2005 (2005-02-17) entire text, all drawings | 1–15 |

☐ Further documents are listed in the continuation of Box C.    ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 19 February 2021 (19.02.2021) | 02 March 2021 (02.03.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**
Information on patent family members

| International application No. |
| --- |
| PCT/JP2020/046246 |

| Patent Documents referred in the Report | Publication Date | Patent Family | Publication Date |
| --- | --- | --- | --- |
| JP 2009-186213 A | 20 Aug. 2009 | (Family: none) | |
| EP 3279609 A1 | 07 Feb. 2018 | (Family: none) | |
| JP 2011-191304 A | 29 Sep. 2011 | EP 2367015 A1 FR 2957414 A US 2011/0219875 A1 | |
| WO 2009/060531 A1 | 14 May 2009 | (Family: none) | |
| JP 2005-43098 A | 17 Feb. 2005 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160047675